# EUROPÄISCHE PATENTSCHRIFT

(11) **EP 4 450 877 B1**
(45) Veröffentlichungstag und Bekanntmachung des Hinweises auf die Patenterteilung: **28.10.2026**
(21) Anmeldenummer: 24166315.2
(22) Anmeldetag: 26.03.2024
(51) Int. Cl.: A47J 27/04, F24C 15/32, F24C 15/00

(54) **DAMPFGARGERÄT, SYSTEM UND VERFAHREN ZUM BETREIBEN DES DAMPFGARGERÄTS**
STEAM COOKING APPLIANCE, SYSTEM AND METHOD FOR OPERATING THE STEAM COOKING APPLIANCE
APPAREIL DE CUISSON À LA VAPEUR, SYSTÈME ET PROCÉDÉ DE FONCTIONNEMENT DE L'APPAREIL DE CUISSON À LA VAPEUR

(30) Priorität: 20.04.2023 DE 102023203635
(43) Veröffentlichungstag der Anmeldung: 23.10.2024
(73) Patentinhaber: BSH Hausgeräte GmbH, 81739 München (DE)
(72) Erfinder: Sauerbier, Rolf, 76275 Ettlingen (DE); Ball, Ludovic, 67770 Sessenheim (FR); Wagner, Benjamin, 70569 Stuttgart (DE)

(56) Entgegenhaltungen:
- EP-A2- 0 913 199
- DE-A1- 102020 105 146
- DE-A1- 102021 201 947
- DE-A1- 102021 201 952
- DE-A1- 102021 204 727
- DE-U1- 202019 102 498
- JP-A- 2010 203 651

## Beschreibung

Die Erfindung betrifft ein Dampfgargerät, aufweisend eine aus einem Schubladengehäuse horizontal ein- und ausfahrbare Dampfgarschublade mit einer durch einen Deckel abdeckbaren Dämpferwanne. Die Erfindung betrifft auch ein System mit einem Dampfgargerät und eine Datenbank. Die Erfindung betrifft ferner ein Verfahren zum Betreiben des Dampfgargeräts.

EP 3 639 706 B1 offenbart ein Verfahren zum Betreiben eines Dampfgargeräts mit einem Speisenzubereitungsraum, einem Dampfsystem, das einen Dampferzeuger und einen Wasserbehälter zum Versorgen des Dampferzeugers mit Wasser umfasst, und einer Antriebseinrichtung zum Versetzen des Wasserbehälters zwischen einer Betriebsposition, in der der Wasserbehälter in das Dampfgargerät eingeführt ist, um den Dampferzeuger mit Wasser zu versorgen, und einer Ruheposition, in der der Wasserbehälter mindestens zum Teil aus dem Dampfgargerät herausgestoßen ist, wobei das Verfahren Folgendes umfasst: (a) Überwachen des Wasserstands innerhalb des Dampfsystems; und (b) Versetzen des Wasserbehälters von der Betriebsposition in die Ruheposition, wenn detektiert wird, dass der Wasserstand innerhalb des Dampfsystems eine vorbestimmte Höhe unterschreitet, wobei die vorbestimmte Höhe basierend auf einem ausgewählten Betriebsmodus für einen jeweiligen Wasserbedarf bestimmt wird.

DE 20 2019 102 498 U1 offenbart ein Haushalts-Dampfbehandlungsgerät, aufweisend einen mit einer Tür verschließbaren Behandlungsraum, eine Verdampfungseinrichtung zum Erzeugen von Dampf und eine ausfahrbare Schublade, die einen nutzerseitig füllbaren Wassertank aufweist, wobei die Schublade einen daran verschwenkbar befestigten Deckel aufweist, der im geöffneten Zustand eine Einfüllöffnung zur Einfüllung von Wasser in den Wassertank freigibt.

DE 10 2010 025 118 A1 offenbart eine Vorrichtung und ein Verfahren zur berührungslosen kapazitiven Füllstandsmessung eines Füllmediums in einem Behälter, wobei die Vorrichtung mehrere Messelektroden und mindestens eine Referenzelektrode aufweist.

DE 10 2008 035 635 B4 offenbart Vorrichtung zur kapazitiven Messung eines Füllstands oder eines Pegels eines Mediums mit einem langgestreckten Sensor zum Erzeugen eines elektrischen Feldes, wobei der Sensor wenigstens zwei langgestreckte Elektroden aufweist, die zur Anordnung außerhalb des Mediums vorgesehen und zur Erzeugung eines elektrischen Feldes geeignet sind, das wenigstens abschnittsweise das Medium durchquert, mit einem auf einem Bezugspotential liegenden Element und mit einer Treiber-/Auswerteeinheit, die Mittel zum Anlegen eines elektrischen Potentials an eine erste der beiden Elektroden aufweist, dadurch gekennzeichnet, dass mittels der Treiber-/Auswerteeinheit die erste der Elektroden niederohmig und die zweite der Elektroden hochohmig angekoppelt ist, so dass sowohl die erste der Elektroden als auch die zweite der Elektroden ein elektrisches Feld ausbilden, dass sich aufgrund des von der ersten der Elektroden erzeugten elektrischen Feldes zwischen der ersten der Elektroden und der zweiten der Elektroden ein elektrisches Feld zwischen der zweiten der Elektroden und dem auf einem Bezugspotential liegenden Element ausbildet, wobei die Treiber-/ Auswerteeinheit Mittel zur Detektion einer Änderung der Kapazität zwischen der zweiten der Elektroden und dem auf einem Bezugspotential liegenden Element als vom Füllstand abhängiges Messsignal aufweist.

DE 10 2007 001 175 A1 offenbart ein Verfahren und eine Vorrichtung zur Füllstandsmessung aggressiver Medien in einem Tank, insbesondere einer Urea-Lösung zur Abgasnachbehandlung bei einer Verbrennungskraftmaschine. Um ein preiswertes sowie zuverlässig arbeitendes Verfahren zur Füllstandsmessung aggressiver Medien und eine entsprechende Vorrichtung zu schaffen, wird vorgeschlagen, dass die Vorrichtung eine Einrichtung zur kapazitiven Leitmessung aufweist, die zur Messung eines Flüssigkeitsstands durch eine Wand eines jeweiligen Tanks hindurch ausgebildet und mit einer Auswerteschaltung verbunden ist.

DE 10 2006 050 367 A1 offenbart ein Verfahren zum Durchführen eines Garprozesses mit einem Kochgerät, insbesondere einem Dampfgargerät, bei dem ein Garprogramm an dem Gargerät ausgewählt wird, vor dem Starten des Garprogramms ein automatisches Überprüfen dahingehend erfolgt, ob in einem Wasserbehälter des Kochgeräts eine zum Durchführen des ausgewählten Garprogramms ausreichende Wassermenge zur Dampferzeugung vorhanden ist, und das Nachfüllen von Wasser in den Wasserbehälter auf einem Display durch zumindest ein Hinweiswort angezeigt wird, falls eine nicht-ausreichende Wassermenge festgestellt wird.

DE 10 2011 120 279 A1 offenbart ein Verfahren zum Dämpfen von Lebensmitteln mittels eines Kontaktgargeräts mit horizontaler Kontaktgarfläche, bei dem eine Dämpfflüssigkeit automatisiert in einen Garbehälter eingefüllt wird, bis ein vorbestimmtes Niveau erreicht ist; und ein Dämpfprozess automatisiert abläuft. Offenbart ist auch ein Gargerät mit einem Garraum, einem Deckel für den Garraum, einer Steuerung, in der mehrere Dämpfprogramme hinterlegt sind, und einer Kommunikationsschnittstelle, mittels der ein Bediener ein Dämpfprogramm auswählen kann.

EP 2 583 599 B1 offenbart ein Verfahren zum automatischen Befüllen eines Gargefäßes eines Gargeräts, das einen für Fluide geeigneten Garraum aufweist, wobei das Gargerät eine elektronische Gerätesteuerung aufweist, die einen Permanentspeicher aufweist, in dem Garabläufe gespeichert werden können und in dem das Nennvolumen des Gargeräts abgespeichert ist, und das eine steuerbare Fluidbefülleinrichtung aufweist, die zur Befüllung des Garraums mit der entsprechenden Flüssigkeitsmenge dient, wobei das Verfahren die folgenden Schritte aufweist: Auswählen und Speichern des Befüllgrades des Gargefäßes relativ zum Nennvolumen des Gargefäßes, Errechnen der Sollmenge der gewünschten Befüllung durch Multiplizieren des Nennvolumens mit dem relativen Befüllgrad, und Übermitteln des errechneten Sollmengenwertes an die Fluidbefülleinrichtung.

DE 10 2020 105 146 A1 offenbart ein Gargerät und eine Schubladeneinrichtung mit einem Gargerät umfassend einen Garraum mit einer Garraumöffnung zum Befüllen des Garraumes, eine Verschlusseinrichtung zum Verschließen der Garraumöffnung und eine Unterdruckeinrichtung in Wirkverbindung zu dem Garraum, wobei dem Garraumboden eine Heizeinrichtung zugeordnet ist. Weiterhin ist einer Garraumwandung eine Heizeinrichtung und/oder der Verschlusseinrichtung eine Heizeinrichtung zugeordnet. Bei dem Verfahren zum Betreiben eines solchen Gargerätes wird zum Erzeugen von Dampf eine vorbestimmte Menge Wasser in den Garraum gefüllt, wobei das Wasser mittels der dem Garraumboden zugeordneten Heizeinrichtung erhitzt wird. Weiterhin wird die einer Garraumwandung und/oder der Verschlusseinrichtung zugeordnete Heizeinrichtung betrieben wird, um eine Kondensation des verdampften Wassers an der Garraumwandung und/oder der Verschlusseinrichtung zu verhindern. Bei weiteren Verfahren wird der Garraum mittels der Heizeinrichtungen auf eine vorbestimmte Temperatur erhitzt und anschließend evakuiert und/oder eine vorbestimmten Menge Wasser wird in den Garraum eingefüllt, es wird Gargut in den Garraum geben, welches in wenigstens einen Vakuumierbeutel eingelegt ist, die Garraumöffnung wird verschlossen, der Garraum wird evakuiert, der Vakuumierbeutel wird verschweißt und die Heizeinrichtungen werden betrieben.

DE 20 2019 102 498 U1 offenbart ein Haushalts-Dampfbehandlungsgerät, aufweisend einen mit einer Tür verschließbaren Behandlungsraum, eine Verdampfungseinrichtung zum Erzeugen von Dampf und eine ausfahrbare Schublade, die einen nutzerseitig füllbaren Wassertank aufweist, wobei die Schublade einen daran verschwenkbar befestigten Deckel aufweist, der im geöffneten Zustand eine Einfüllöffnung zur Einfüllung von Wasser in den Wassertank freigibt.

Es ist die **Aufgabe** der vorliegenden Erfindung, die Nachteile des Standes der Technik zumindest teilweise zu überwinden und insbesondere eine verbesserte Möglichkeit bereitzustellen, eine Dampfgarschublade mit Flüssigkeit zu füllen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Dampfgargerät, aufweisend eine aus einem Schubladengehäuse horizontal ein- und ausfahrbare Dampfgarschublade mit einer durch einen Deckel abdeckbaren Dämpferwanne, wobei ein Boden der Dämpferwanne geneigt ist, an seinem tiefsten Bereich heizbar ist und mit mindestens einer Gruppe ("Markierungsgruppe") umfassend jeweils mindestens eine Füllstandsmarkierung ausgestattet ist.

Dadurch wird der Vorteil erreicht, dass der Benutzer die Wassermenge nicht selbst zu messen braucht, um ein optimales Garergebnis zu erhalten. Außerdem lässt sich die Restwassermenge vorteilhafterweise besonders gering halten, wodurch ein Nutzer am Ende eines Garvorgangs wenig Wasser auszuwischen braucht. Ferner werden der Energieverbrauch und der Wasserverbrauch vorteilhafterweise auf ein Minimum reduziert. Darüber hinaus wird vorteilhafterweise eine schnellere Ankochzeit erreicht, weil nur so viel Wasser wie nötig eingefüllt zu werden braucht. Insgesamt ergeben sich eine verkürzte Garzeit und ein besseres Garergebnis. Dabei wird ausgenutzt, dass in einer Dampfschublade mit wanneninternem Verdampfer die eingefüllte Wassermenge einen erheblichen Einfluss auf das Garergebnis, den Nutzerkomfort, die Ankochzeit und den Wasser- und Energieverbrauch hat: wird zu wenig Wasser eingefüllt, ist die Gardauerreichweite zu kurz. Der Garprozess kann dann nicht beendet werden bzw. der Nutzer muss Wasser neu einfüllen und den Garvorgang erneut starten. Wird hingegen zu viel Wasser eingefüllt, wird die Ankochzeit deutlich erhöht. Dies kann insbesondere einen nachteiligen Einfluss auf Garergebnisse von Gargütern, die auf eine zu lange Ankochzeit sensibel reagieren (z.B. Broccoli), haben. Ein anderer Nachteil dabei ist, dass am Ende des Garvorgangs viel Wasser in der Dämpferwanne übrig bleibt. Zusätzlich wird nachteiligerweise auch unnötig Energie verbraucht, um eine zu große Wassermenge zu erhitzen.

Die Dämpferwanne und der darauf, insbesondere dampfdicht, aufgesetzte Deckel bilden einen Dampfbehandlungsraum für darin befindliches dampfzubehandelndes Gut, insbesondere Gargut. Vorliegend wird der Dampf direkt in der Dämpferwanne erzeugt, und zwar dadurch, dass der tiefste Bereich des Bodens so weit heizbar ist, dass darauf stehende Flüssigkeit verdampft. Die Flüssigkeit wird von dem Benutzer direkt in die Dämpferwanne eingegeben, z.B. eingeschüttet. Die pro Zeiteinheit erzeugte Dampfmenge und ggf. auch die Temperatur in dem Dampfbehandlungsraum lässt sich durch die eingeprägte Wärmeenergie einstellen. Dass das Gerät als "Dampfgargerät" und die Dampfschublade als "Dampfgarschublade" bezeichnet werden, schließt nicht aus, dass auch anderes Gut als Gargut darin dampfbehandelbar ist. Jedoch sind die Füllstandsmarkierungen insbesondere speziell auf ein Dampfgaren abgestimmt.

Die Flüssigkeit ist insbesondere eine wasserbasierte Flüssigkeit, z.B. Frischwasser, aromatisiertes Wasser, mit Reinigungsmittel, insbesondere Entkalkungsmittel, versetztes Wasser, usw.

Dass der Boden der Dämpferwanne geneigt ist, umfasst insbesondere, dass zumindest ein Teilbereich des Bodens gegen die horizontale Raumebene geneigt bzw. angewinkelt ist. Der tiefste Bereich des Bodens wird in Bezug auf eine Höhenerstreckung der Dampfschublade bestimmt und entspricht insbesondere dem Bereich, in den eine auf dem geneigten Boden bzw. Teilbereich davon befindliche Flüssigkeit schwerkraftgetrieben herabfließt. Es ist eine Weiterbildung, dass ein Neigungswinkel gegenüber der horizontalen Ebene zwischen 1° und 5°, insbesondere zwischen 2° und 3°, liegt. Dies ist besonders vorteilhaft, weil so einerseits ein sicheres Abfließen von auf dem Boden befindlicher Flüssigkeit zum tiefsten Bereich erreicht wird und andererseits die Flüssigkeit im tiefsten Bereich in konstruktiv einfacher Umsetzung praktisch vollständig verdampfbar ist. Zur praktisch vollständigen Verdampfbarkeit ist es ferner vorteilhaft, wenn ein Heizbereich an einen tiefsten Punkt oder tiefsten Rand des Bodens bzw. dessen tiefsten Bereichs grenzt oder zumindest einen nur sehr geringen Abstand dazu aufweist, z.B. von nicht mehr als 3 mm, insbesondere 2 mm, insbesondere 1 mm.

Eine Füllstandmarkierung entspricht insbesondere einer bestimmten Füllstandshöhe und damit auch einem bestimmten Volumen von in die Dämpferwanne eingefüllter Flüssigkeit.

Es ist eine Weiterbildung, dass mindestens eine Markierungsgruppe genau eine Füllstandsmarkierung aufweist. Dies kann beispielsweise vorteilhaft sein, um bestimmte Betriebsabläufe, die nur eine einzige Füllstandsmarkierung benötigen, durchzuführen, z.B. einen Entkalkungsablauf.

Es ist eine Weiterbildung, dass mindestens eine Markierungsgruppe mehrere unterschiedliche Füllstandsmarkierungen aufweist. Dies kann beispielsweise vorteilhaft sein, um unterschiedliche Flüssigkeitsvolumina mit hoher Genauigkeit in die Dämpferwanne einzufüllen, die nur eine einzige Füllstandsmarkierung benötigen, z.B. um Dampfbehandlungsvorgänge, insbesondere Dampfgarvorgänge, durchzuführen, für die bestimmtes markiertes Flüssigkeitsvolumen besonders geeignet ist.

Am Boden der Dämpferwanne können Füllstandsmarkierungen einer oder mehrerer Markierungsgruppe vorhanden sein. Es ist eine Weiterbildung, dass mindestens eine Füllstandsmarkierung nur einer Markierungsgruppe zugehörig ist. Es ist eine Weiterbildung, dass mindestens eine Füllstandsmarkierung nur einer Markierungsgruppe zugehörig ist. Es ist eine Weiterbildung, dass mindestens eine Füllstandsmarkierung mehreren Markierungsgruppen zugehörig ist.

Es ist eine Weiterbildung, dass eine Füllstandsmarkierung eine einfache geometrische Markierung ist, z.B. ein Punkt, ein Strich oder eine Linie. Es ist eine Weiterbildung, dass eine Füllstandsmarkierung zusätzlich zu einer geometrischen Markierung mindestens ein der geometrischen Markierung zugeordnetes Schriftzeichen aufweist, beispielsweise mindestens einen Buchstaben, mindestes eine Zahl und/oder mindestens ein Symbol. Eine Markierungsgruppe kann eine grundsätzlich beliebige Kombination von Füllstandsmarkierungen umfassen, beispielsweise umfassend mehrere geometrische Markierungen, z.B. in Form einer Skala, mehrere geometrische Markierungen mit jeweils zugeordneten Schriftzeichen, z.B. in Form einer Skala mit jeweiligen Beschriftungen, und/oder eine Kombination aus geometrische Markierungen mit jeweils zugeordneten Schriftzeichen und geometrische Markierungen ohne jeweils zugeordneten Schriftzeichen, z.B. in Form einer Skala mit jeweiligen Beschriftungen an Hauptstrichen und ohne Beschriftungen an Teilstrichen..

Die Füllstandsmarkierungen können beispielsweise mit der Dämpferwanne hergestellt worden sein, beispielsweise im Rahmen eines Gussverfahrens, oder nachträglich eingebracht worden sein, beispielsweise als Prägung, Stempelung, Stanzung, Bedruckung, Laserablation, usw. Die Dämpferwanne kann aus Metall, insbesondere Edelstahl, oder Kunststoff bestehen.

Es ist eine Ausgestaltung, dass der Boden eine zum tiefsten Bereich eben geneigte Fläche aufweist oder ist. Dies ist vorteilhafterweise besonders einfach umsetzbar und ermöglicht einen besonders großen, insbesondere großflächigen, Heizbereich. Diese Ausgestaltung umfasst insbesondere, dass eine oberseitige Oberfläche des Bodens oder zumindest ein geneigter Teilbereich davon eine ebene bzw. plane Form mit einer definierten konstanten Neigung gegenüber der Horizontalen aufweist. Die Markierungen können dann z.B. als gerade Linien bzw. Striche ausgebildet sein.

Es ist eine Weiterbildung, dass der tiefste Bereich des Bodens einen Teilbereich der dazu eben bzw. plan geneigten Fläche darstellt. Dabei ist der Boden dann insbesondere als Ganzes als ebene Fläche ausgebildet. Dies ist besonders einfach umsetzbar. Es ist eine Weiterbildung, dass der tiefste Bereich des Bodens eine z.B. gekrümmte Schalenform aufweist, während der daran anschließende und zum tiefsten Bereich führende geneigte Teilbereich eben ist. Es ist eine Weiterbildung, dass der tiefste Bereich des Bodens eben ist, aber eine geringere Neigung als der daran anschließende und zum tiefsten Bereich führende Teilbereich des Bodens aufweist, oder sogar keine Neigung aufweist bzw. horizontal ausgerichtet ist.

Es ist eine Ausgestaltung, dass der Boden gegen eine Verfahrrichtung der Dampfgarschublade geneigt ist. Dies ermöglicht vorteilhafterweise eine besonders gute Ablesbarkeit der Markierungen durch einen frontal vor dem Dampfgargerät stehenden Nutzer.

Es ist eine Ausgestaltung, dass sich der tiefste Bereich unterhalb der tiefsten Füllstandsmarkierung befindet. Dadurch wird der Vorteil erreicht, dass sich auch bei geringen Füllstandsvolumina die Flüssigkeit definiert verdampfen lässt.

Es ist eine Ausgestaltung, dass der Boden der Dämpferwanne dadurch heizbar ist, dass an dem tiefsten Bereich mindestens ein Heizbereich angeordnet ist. Dieser Heizbereich kann den tiefsten Bereich oder einen Teilbereich des tiefsten Bereichs einnehmen. Die durch den Heizbereich erzeugte Wärmeenergie lässt sich insbesondere durch das Dampfgargerät einstellen bzw. variieren. Es ist eine Weiterbildung, dass der mindestens eine Heizbereich aus Metall besteht, insbesondere Metallblech, oder solches aufweist. Es ist eine Weiterbildung, dass der Heizbereich ein in den Boden eingelegtes, insbesondere längliches, Inlay aufweist, das insbesondere aus einem thermisch besser leitfähigen Material besteht als die restliche Dämpferwanne, z.B. aus Kupfer anstelle von sonst verwendetem Edelstahl, Kunststoff, usw..

Es ist eine Weiterbildung, dass dem Heizbereich mindestens ein elektrisch betreibbares Heizelement zugeordnet ist. Es ist eine Weiterbildung, dass dem Heizbereich mindestens ein elektrisches Widerstandsheizelement zugeordnet ist, das beispielsweise an der dem Dampfbehandlungsraum abgewandten Unterseite des Heizbereichs oder in den Heizbereich eingebettet sein kann. Das elektrische Widerstandsheizelement kann beispielsweise getaktet getrieben werden, wobei insbesondere durch Variieren z.B. des Tastgrads seine Wärmeerzeugung und damit ein Wärmeeintrag über den Heizbereich variierbar ist. Es ist eine Weiterbildung, dass der Heizbereich ein induktiv heizbarer Heizbereich ist. Dazu kann z.B. an der dem Dampfbehandlungsraum abgewandten Unterseite des metallischen Heizbereichs mindestens eine durch das Dampfgargerät steuerbare Erregerspule vorhanden sein.

Es ist eine Ausgestaltung, dass eine (ohne Beschränkung der Allgemeinheit als "erste" Markierungsgruppe bezeichnete) Markierungsgruppe mehrere Füllstandsmarkierungen aufweist, die einer jeweils zugehörigen Reichweite einer Dampfbehandlungs- insbesondere Gardauer, entsprechen. Dies ist besonders vorteilhaft, wenn ein Nutzer die Dauer benötigt, für die ein Dampfbehandlungsvorgang laufen soll. Die Füllstandsmarkierungen können beispielsweise unterschiedlichen Dampfbehandlungsdauern bzw. Reichweiten entsprechen, z.B. Minuten und/oder Stunden. Diese Werte können beispielsweise von der Konstruktion der Dampfgarschublade abhängen, z.B. deren Heizleistung, Volumen der Dämpferwanne, thermische Isolierung, usw.

Es ist eine Ausgestaltung, dass eine (ohne Beschränkung der Allgemeinheit als "zweite" Markierungsgruppe bezeichnete) Markierungsgruppe mehrere Füllstandsmarkierungen aufweist, die einer jeweils zugehörigen Kombination von gewünschter Gardauer und Temperatur entsprechen. Dies ist besonders nutzerfreundlich, um Speisen bzw. Gerichte dampfgaren zu können. Die Markierungen können dann insbesondere bezüglich eines Flüssigkeitsvolumens uneinheitlich beabstandet sein. Es ist eine Weiterbildung, dass in der zweiten Markierungsgruppe unterschiedliche Schriftzeichen für unterschiedliche Kombination von gewünschter Gardauer und Temperatur vorgesehen bzw. vorhanden sind, z.B. unterschiedliche Buchstaben. Die Bedeutung der Buchstaben kann von einem Nutzer aus einer Datenbank, einer Gebrauchsanleitung usw. herausgelesen werden. Möchte ein Nutzer z.B. Gargut 8 min bei einer Temperatur von 100 °C garen, sollte er laut Information aus der Datenbank, Gebrauchsanleitung, usw. Wasser bis zu einer mit dem Buchstaben "A" gekennzeichneten Markierung auffüllen (was z.B. einer Füllmenge von 120 ml entsprechen kann, ohne dass der Nutzer die Füllmenge als solche zu kennen braucht). Möchte ein Nutzer hingegen z.B. Gargut 20 min bei einer Temperatur von 80 °C garen, sollte er laut Information aus der Datenbank, Gebrauchsanleitung, usw. Wasser bis zu einer Markierung "B" auffüllen (was z.B. einer Füllmenge von 170 ml entsprechen kann, ohne dass der Nutzer die Füllmenge als solche zu kennen braucht).

Es ist eine Ausgestaltung, dass eine (ohne Beschränkung der Allgemeinheit als "dritte" Markierungsgruppe bezeichnete) Markierungsgruppe mehrere Füllstandsmarkierungen aufweist, die einer jeweils zugehörigen Anwendung, insbesondere einem dampfzubehandelndem Gericht oder Speise, entsprechen. Dies ist besonders vorteilhaft, um die richtige Füllmenge für bestimmte, insbesondere häufig verwendete, Speisen bzw. Gerichte intuitiv einfüllen zu können. Die Markierungen können bezüglich eines Flüssigkeitsvolumens insbesondere uneinheitlich beabstandet sein. Es ist eine Weiterbildung, dass in der dritten Markierungsgruppe unterschiedliche, jeweilige Speisen oder Gerichte darstellende Symbole bzw. vorhanden sind. Die Bedeutung der Symbole kann zusätzlich oder alternativ von einem Nutzer aus einer Datenbank, einer Gebrauchsanleitung usw. herausgelesen werden. Möchte ein Nutzer z.B. Brokkoli garen, kann er Wasser bis zu einer mit dem Symbol "Brokkoli" gekennzeichneten Markierung auffüllen (was z.B. einer Füllmenge von 120 ml entsprechen kann, ohne dass der Nutzer die Füllmenge als solche zu kennen braucht). Möchte ein Nutzer hingegen z.B. eine Forelle garen, kann er Wasser bis zu einer mit dem Symbol "Fisch" gekennzeichneten Markierung auffüllen (was z.B. einer Füllmenge von 170 ml entsprechen kann, ohne dass der Nutzer die Füllmenge als solche zu kennen braucht).

Die obigen Füllmengen und/oder Markierung können während einer Entwicklungsphase des Dampfgargeräts für definierte Gerichte bzw. Gerichte ermittelt werden, z.B. je nach benötigter Gardauer und Temperatur.

Es ist eine Ausgestaltung, dass eine (ohne Beschränkung der Allgemeinheit als "vierte" Markierungsgruppe bezeichnete) Markierungsgruppe mehrere Füllstandsmarkierungen aufweist, die einer jeweils zugehörigen eingefüllten Wassermenge entsprechen. Dies ist vorteilhafterweise besonders universell nutzbar. Die Wassermenge kann z.B. in Liter oder Milliliter angegeben werden. Die Füllstandsmarkierungen können beispielsweise durch Schriftzeihen in Form von den Füllmengen entsprechenden Zahlen angegeben werden.

Die Aufgabe wird auch gelöst durch ein System mit einem Dampfgargerät wie oben beschrieben und einer Datenbank, wobei in der Datenbank Verknüpfungen zwischen Füllstandsmarkierungen mindestens einer Markierungsgruppe einerseits und zumindest bestimmten Kombination von gewünschter Gardauer und Temperatur und/oder Anwendungen (speziell Speisen bzw. Gerichten) andererseits durch einen Nutzer auslesbar gespeichert sind. Das System kann analog zu dem Dampfgargerät ausgebildet werden, und umgekehrt, und weist die gleichen Vorteile auf.

Die Datenbank kann beispielsweise in einem Datenspeicher des Dampfgargeräts oder in einer bezüglich des Dampfgargeräts externen Instanz wie einem netzwerkfähigen Speicher (z.B. auf einem Netzwerkserver, in einem Cloudspeicher, usw.) , einem Nutzerendgerät (z.B. einem mobilen Nutzerendgerät wie einem Smartphone oder einem Tablet, usw.) gespeichert sein. Die Datenbank kann mit einer Steuereinrichtung des Dampfgargeräts kommunikativ gekoppelt sein, beispielsweise um einem Nutzer für von ihm ausgewählten Betriebsablaufs sowohl die zugehörige Füllstandsmarkierung anzugeben als auch das Dampfgargerät zur Durchführung dieses Betriebsablaufs anzusteuern.

Die Aufgabe wird außerdem gelöst durch ein Verfahren zum Betreiben des erfindungsgemäßen Dampfgargeräts, bei dem
- bei geöffneter Dampfgarschublade Flüssigkeit in die Dämpferwanne bis zu einer durch die mindestens eine Füllstandsmarkierung definierten Füllhöhe eingefüllt wird,
- dann die Dampfgarschublade in das Schubladengehäuse eingefahren wird und
- dann die eingefahrene Dampfgarschublade bzw. deren Heizbereich zum Erzeugen von Dampf beheizt wird.

Das Verfahren kann analog zu dem Dampfgargerät und dem System ausgebildet werden, und umgekehrt, und weist die gleichen Vorteile auf.

So kann zum Erzeugen des Dampfs ein elektrischer (Widerstands- oder Induktions-) Heizkörper eingeschaltet und insbesondere getaktet betrieben werden, um eine definierte Temperatur in dem Dampfbehandlungsraum zur erreichen.

Zum Erzeugen von Dampf wird mindestens ein Heizkörper eingeschaltet und ggf. getaktet, um an dem Heizbereich eine definierte Temperatur und damit auch ein definiertes Dampferzeugungsvolumen zu erreichen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Draufsicht in Schnittdarstellung eine Skizze eines Dampfgargeräts mit Dampfgarschublade und Schubladengehäuse; und
- Fig.2: zeigt als Schnittdarstellung in Seitenansicht eine Skizze der Dampfgarschublade aus Fig.1 sowie ein zugehöriges System.

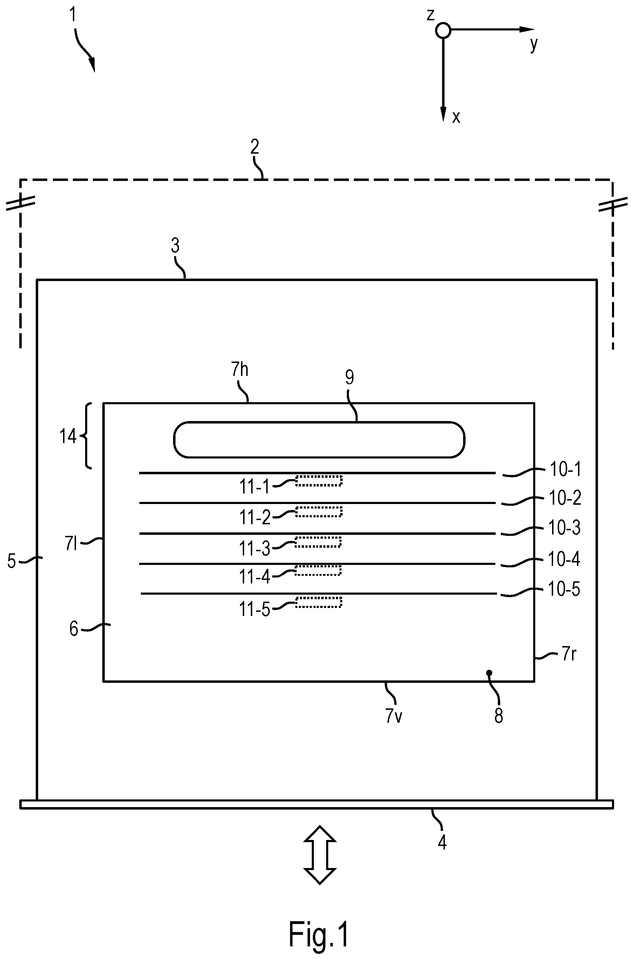

**Fig.1** zeigt ein Dampfgargerät 1, aufweisend eine aus einem Schubladengehäuse 2 horizontal (d.h. hier: in einer (x; y)-Ebene ein- und ausfahrbare Dampfgarschublade 3. Eine durch den Doppelpfeil angedeutet Verfahrrichtung nach vorne bzw. hinten entspricht hier der eingezeichneten x-Achse. Eine Höhenerstreckung des Dampfgargeräts 1 entspricht einer Erstreckung entlang der senkrecht aus der Bildebene vorstehenden z-Achse. Die Dampfgarschublade 3 weist eine frontseitige Frontplatte 4 auf, die einen Tragrahmen 5 abdeckt, der gegenüber dem stationären Schubladengehäuse 2 verfahrbar ist, z.B. mittels Gleitschienen oder einem Teleskopgestänge (o. Abb.). In den Tragrahmen 5 ist entnehmbar oder fest verbaut eine nach oben offene Dämpferwanne 6 eingelassen. Die offene Oberseite der Dämpferwanne 6 dient als Beschickungsöffnung für dampfzubehandelndes Gut, insbesondere Gargut.

Die Dämpferwanne 6 weist eine zumindest ungefähr rechteckige Grundform mit Seitenwänden 7v, 7h, 7l und 7r und einem ebenen Boden 8 auf. Nahe der hinteren Seitenwand 7h und parallel dazu ist in den Boden 8 ein längliches Inlay 9 insbesondere flächenbündig eingelassen, das insbesondere aus einem thermisch besser leitfähigen Material besteht als die restliche Dämpferwanne 6, z.B. aus Kupfer anstelle von dem sonst verwendeten Edelstahl.

Gargut kann direkt in die Dämpferwanne 6 eingelegt werden oder kann vorteilhafterweise in z.B. durch Löcher, Schlitze usw. dampfdurchlässig ausgebildete Körbe o.ä. (o. Abb.) eingelegt werden, welche dann insbesondere beabstandet zu dem Boden ("schwebend") in die Dämpferwanne 6 eingehängt werden können.

Der Boden 8 ist mit einer Markierungsgruppe umfassend mehrere Füllstandsmarkierungen 10-1 bis 10-5 ausgestattet, wobei jeder der Füllstandsmarkierungen 10-1 bis 10-5 mindestens ein entsprechendes Schriftzeichen 11-1 bis 11-5 zugeordnet ist, z.B. mindestens ein Buchstabe, mindestens eine Zahl und/oder mindestens ein Symbol. Obwohl die Füllstandsmarkierungen 10-1 bis 10-5 hier in Verfahrrichtung äquidistant eingezeichnet sind, ist dies nicht zwingend. Die Schriftzeichen 11-1 bis 11-5 können beispielsweise Werte (z.B. Volumina wie "70 ml", "120 ml", "170 ml" usw. oder Reichweiten einer Dampferzeugung wie "15 min", "30 min", "1 Std." usw.), Buchstaben (z.B. "A", "B", "C" usw.), Text (z.B. "Gemüse", "Fisch" usw.) oder graphische Symbole usw. sein oder aufweisen.

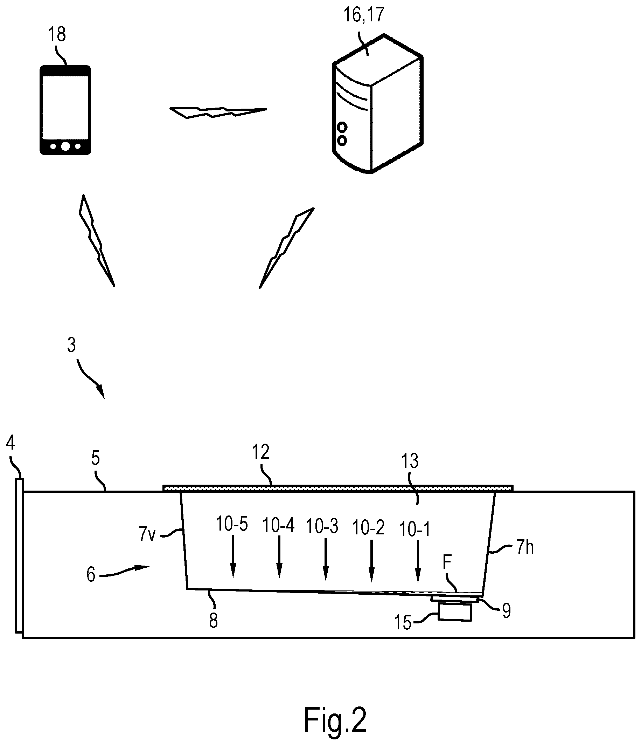

**Fig.2** zeigt als Schnittdarstellung in Seitenansicht eine Skizze der Dampfgarschublade 3. Hier ist die offene Oberseite der Dämpferwanne 6 durch einen - in Fig.1 nicht dargestellten - Deckel 12 insbesondere dampfdicht abgedeckt. Der Deckel 12 kann bezüglich des Tragrahmens 5 abnehmbar oder verschwenkbar sein. Der Deckel 12 kann beispielsweise aus Glas oder insbesondere durchsichtigem Kunststoff bestehen. Bei aufgesetztem Deckel 12 wird durch diesen und die Dämpferwanne 6 ein mit Dampf befüllbarer Dampfbehandlungsraum 13 gebildet.

Der Boden 8 ist hier von vorne nach hinten abschüssig geneigt ausgebildet, also bezüglich der Verfahrrichtung bzw. x-Achse. Insbesondere liegt ein Neigungswinkel gegenüber der x-Achse hier im Bereich zwischen 1° und 5°, insbesondere zwischen 2° und 3°. Der tiefste Bereich 14 des Bodens 8 grenzt also an die hintere Seitenwand 7h und erstreckt sich hier beispielsweise nach vorne bis über das Inlay 9, insbesondere bis oder fast bis zu der hintersten Füllstandsmarkierung 10-1, welche auch die tiefste bzw. tiefstliegende der Füllstandsmarkierungen 10-1 bis 10-5 darstellt. Damit befindet sich der tiefste Bereich 14 unterhalb der hintersten Füllstandsmarkierung 10-1.

Das Inlay 9 dient als Heizbereich zum Verdampfen von in die Dämpferwanne 6 eingefüllter Flüssigkeit F. Zu diesem Zweck ist an der dem dampfbehandlungsraum 13 abgewandten Unterseite des Inlays 9 mindestens ein elektrisch betreibbares Heizelement 15 angeordnet, z.B. ein Widerstandsheizelement oder eine Erregerspule, mittels sich das Inlay 9 aufheizen lässt.

Fig.2 zeigt ferner ein System, aufweisend das Dampfgargerät 1 und eine in einem Netzwerkspeicher 16 vorhandene Datenbank 17, wobei in der Datenbank 17 Verknüpfungen zwischen Füllstandsmarkierungen 10-1 bis 10-5 mindestens einer Markierungsgruppe einerseits und bestimmten Kombination von gewünschter Gardauer und Temperatur und/oder Anwendungen durch einen Nutzer auslesbar gespeichert sind. Das Auslesen kann über ein beispielsweise mobiles Nutzerendgerät wie ein Smartphone 18 erfolgen, auf dem ein passendes Applikationsprogramm ("App") installiert ist.

Zum Betreiben eines des Dampfgargeräts 1 kann ein Nutzer beispielsweise in der App ein Rezept auswählen, das beispielsweise ebenfalls in der Datenbank 17 gespeichert sein kann. Mit Auswahl erhält der Nutzer in der App einen Hinweis auf die dafür passende Füllstandsmarkierungen 10-1 bis 10-5. Der Nutzer kann nun bei geöffneter Dampfgarschublade 3 Flüssigkeit F in die Dämpferwanne 6 bis zu der empfohlenen Füllstandsmarkierung 10-1 bis 10-5 einfüllen, z.B. Frischwasser. Nach folgendem Beschicken der Dämpferwanne 6 mit Gargut und Einfahren der Dampfgarschublade 3 in das Schubladengehäuse 2 kann ein auf das Rezept passender Dampfgarablauf automatisch oder durch einen Nutzer gestartet werden, wobei die eingefahrene Dampfgarschublade 3 mittels einer Steuereinrichtung (o. Abb.) des Dampfgargeräts 1 durch ggf. getaktete Bestromung des Heizelements 15 beheizt wird. Die Betriebsparameter des Garablaufs wie Temperatur in dem Behandlungsraum 13, Gardauer usw. können an dem Dampfgargerät 1 manuell eingestellt werden oder z.B. automatisch von der App bzw. dem Smartphone 18 empfangen werden, beispielsweise drahtlos, z.B. über Bluetooth oder WiFi.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Dampfgargerät
- 2: Schubladengehäuse
- 3: Dampfgarschublade
- 4: Frontplatte
- 5: Tragrahmen
- 6: Dämpferwanne
- 7h: Hintere Seitenwand
- 7l: Linke Seitenwand
- 7r: Rechte Seitenwand
- 7v: Vordere Seitenwand
- 8: Boden
- 9: Inlay
- 10-1 - 10-5: Füllstandsmarkierung
- 11-1 bis 11-5: Schriftzeichen
- 12: Deckel
- 13: Dampfbehandlungsraum
- 14: Tiefster Bereich
- 15: Heizelement
- 16: Netzwerkspeicher
- 17: Datenbank
- 18: Smartphone
- F: Flüssigkeit
- x: x-Achse
- y: y-Achse
- z: z-Achse

## Patentansprüche

1. Dampfgargerät (1), aufweisend eine aus einem Schubladengehäuse (2) horizontal ein- und ausfahrbare Dampfgarschublade (3) mit einer durch einen Deckel (12) abdeckbaren Dämpferwanne (6), **dadurch gekennzeichnet, dass** ein Boden (8) der Dämpferwanne (6) geneigt ist, an seinem tiefsten Bereich (14) heizbar ist und mit mindestens einer Markierungsgruppe umfassend jeweils mindestens eine Füllstandsmarkierung (10-1 - 10-5) ausgestattet ist.

2. Dampfgargerät (1) nach Anspruch 1, wobei der Boden (8) eine zum tiefsten Bereich (14) eben geneigte Fläche aufweist.

3. Dampfgargerät (1) nach einem der vorhergehenden Ansprüche, wobei der Boden (8) gegen eine Verfahrrichtung der Dampfgarschublade (3) geneigt ist.

4. Dampfgargerät (1) nach einem der vorhergehenden Ansprüche, wobei sich der tiefste Bereich (14) unterhalb der tiefsten Füllstandsmarkierung (10-1) befindet.

5. Dampfgargerät (1) nach einem der vorhergehenden Ansprüche, wobei der Boden (8) der Dämpferwanne (6) dadurch heizbar ist, dass an dem tiefsten Bereich (14) mindestens ein Heizbereich (15) angeordnet ist.

6. Dampfgargerät (1) nach einem der vorhergehenden Ansprüche, wobei eine erste Markierungsgruppe mehrere Füllstandsmarkierungen (10-1 - 10-5) aufweist, die einer jeweils zugehörigen Reichweite einer Gardauer entsprechen.

7. Dampfgargerät (1) nach einem der vorhergehenden Ansprüche, wobei eine zweite Markierungsgruppe mehrere Füllstandsmarkierungen (10-1 - 10-5) aufweist, die einer jeweils zugehörigen Kombination von gewünschter Gardauer und Temperatur entsprechen.

8. Dampfgargerät (1) nach einem der vorhergehenden Ansprüche, wobei eine dritte Markierungsgruppe mehrere Füllstandsmarkierungen (10-1 - 10-5) aufweist, die einer jeweils zugehörigen Anwendung, insbesondere einem dampfzubehandelndem Gericht, entsprechen.

9. Dampfgargerät (1) nach einem der vorhergehenden Ansprüche, wobei eine vierte Markierungsgruppe mehrere Füllstandsmarkierungen (10-1 - 10-5) aufweist, die einer jeweils zugehörigen eingefüllten Wassermenge entsprechen.

10. System, aufweisend ein Dampfgargerät (1) nach einem der vorhergehenden Ansprüche und eine Datenbank (17), wobei in der Datenbank (17) Verknüpfungen zwischen Füllstandsmarkierungen (10-1 - 10-5) mindestens einer Markierungsgruppe einerseits und bestimmten Kombination von gewünschter Gardauer und Temperatur und/oder Anwendungen durch einen Nutzer auslesbar gespeichert sind.

11. Verfahren zum Betreiben des Dampfgargeräts (1) nach einem der vorhergehenden Ansprüche, bei dem
- bei geöffneter Dampfgarschublade (3) Flüssigkeit (F) in die Dämpferwanne (6) bis zu einer durch die mindestens eine Füllstandsmarkierung (10-1 - 10-5) definierten Füllhöhe eingefüllt wird,
- dann die Dampfgarschublade (3) in das Schubladengehäuse (2) eingefahren wird
und
- dann die eingefahrene Dampfgarschublade (3) beheizt wird.

## Claims

1. Steam cooking appliance (1), having a steam cooking drawer (3) which can be horizontally retracted into and extended from a drawer housing (3) with a steamer tray (6) which can be covered by a cover (12), **characterised in that** a base (8) of the steamer tray (6) is inclined, can be heated at its lowest area (14) and is equipped with at least one marker group comprising in each case at least one fill level marker (10-1, 10-5).

2. Steam cooking appliance (1) according to claim 1, wherein the base (8) has a surface which is inclined at a level with respect to the lowest area (14).

3. Steam cooking appliance (1) according to one of the preceding claims, wherein the base (8) is inclined toward a direction of movement of the steam cooking drawer (3).

4. Steam cooking appliance (1) according to one of the preceding claims, wherein the lowest area (14) is located below the lowest fill level marker (10-1).

5. Steam cooking appliance (1) according to one of the preceding claims, wherein the base (8) of the steamer tray (6) can be heated in that at least one heating area (15) is arranged at the lowest area (14).

6. Steam cooking appliance (1) according to one of the preceding claims, wherein a first marker group has a number of fill level markers (10-1 - 10-5) which correspond to a respectively associated range of a cooking time.

7. Steam cooking appliance (1) according to one of the preceding claims, wherein a second marker group has a number of fill level markers (10-1 -10-5) which correspond to a respectively associated combination of desired cooking time and temperature.

8. Steam cooking appliance (1) according to one of the preceding claims, wherein a third marker group has a number of fill level markers (10-1 - 10-5) which correspond to a respectively associated application, in particular a dish to be steamed.

9. Steam cooking appliance (1) according to one of the preceding claims, wherein a fourth marker group has a number of fill level markers (10-1 - 10-5) which correspond to a respectively associated filled water quantity.

10. System, having a steam cooking appliance (1) according to one of the preceding claims and a database (17), wherein links between fill level markers (10-1 - 10-5) of at least one marker group on the one hand and specific combinations of desired cooking time and temperature and/or applications are stored in the database (17) such that they can be read out by a user.

11. Method for operating the steam cooking appliance (1) according to one of the preceding claims, in which
- when the steam cooking drawer (3) is opened, liquid (F) is filled into the steamer tray (6) up to a fill level defined by the at least one fill level marker (10-1 - 10-5),
- the steam cooking tray (3) is retracted into the drawer housing (2) and
- the retracted steam cooking drawer (3) is then heated.

## Revendications

1. Appareil de cuisson à la vapeur (1), présentant un tiroir de cuisson à la vapeur (3) pouvant être introduit et extrait horizontalement d'une carcasse de tiroir (2) avec un bac de cuiseur vapeur (6) pouvant être couvert par un couvercle (12), **caractérisé en ce qu'**un fond (8) du bac de cuiseur vapeur (6) est incliné, peut être chauffé en sa zone la plus profonde (14) et est équipé d'au moins un groupe de marquages comprenant respectivement au moins un marquage de niveau de remplissage (10-1 - 10-5).

2. Appareil de cuisson à la vapeur (1) selon la revendication 1, dans lequel le fond (8) présente une surface inclinée de façon plane vers la zone la plus profonde (14).

3. Appareil de cuisson à la vapeur (1) selon l'une des revendications précédentes, dans lequel le fond (8) est incliné à l'encontre d'un sens de déplacement du tiroir de cuisson à la vapeur.

4. Appareil de cuisson à la vapeur (1) selon l'une des revendications précédentes, dans lequel la zone la plus profonde (14) se trouve en dessous du marquage de niveau de remplissage le plus profond (10-1).

5. Appareil de cuisson à la vapeur (1) selon l'une des revendications précédentes, dans lequel le fond (8) du bac de cuiseur vapeur (6) peut être chauffé par le fait qu'au moins une zone de chauffe (15) est disposée au niveau de la zone la plus profonde (14).

6. Appareil de cuisson à la vapeur (1) selon l'une des revendications précédentes, dans lequel un premier groupe de marquages présente plusieurs marquages de niveau de remplissage (10-1 - 10-5), qui correspondent respectivement à une autonomie d'une durée de cuisson.

7. Appareil de cuisson à la vapeur (1) selon l'une des revendications précédentes, dans lequel un deuxième groupe de marquages présente plusieurs marquages de niveau de remplissage (10-1 - 10-5), qui correspondent respectivement à une combinaison de durée de cuisson et de température souhaitées.

8. Appareil de cuisson à la vapeur (1) selon l'une des revendications précédentes, dans lequel un troisième groupe de marquages présente plusieurs marquages de niveau de remplissage (10-1 - 10-5), qui correspondent respectivement à une utilisation, en particulier à un plat à traiter à la vapeur.

9. Appareil de cuisson à la vapeur (1) selon l'une des revendications précédentes, dans lequel un quatrième groupe de marquages présente plusieurs marquages de niveau de remplissage (10-1 - 10-5), qui correspondent respectivement à une quantité d'eau versée.

10. Système présentant un appareil de cuisson à la vapeur (1) selon l'une des revendications précédentes et une base de données (17), dans lequel des liens entre des marquages de niveau de remplissage (10-1 - 10-5) d'au moins un groupe de marquages d'une part et des combinaisons déterminées de durées de cuisson et températures souhaitées et/ou utilisations sont enregistrés de façon lisible par un utilisateur dans la base de données (17).

11. Procédé d'exploitation de l'appareil de cuisson à la vapeur (1) selon l'une des revendications précédentes, dans lequel
- lorsque le tiroir de cuisson à la vapeur (3) est ouvert, du liquide (F) est versé dans le bac de cuisson vapeur (6) jusqu'à une hauteur de remplissage définie par l'au moins un marquage de remplissage (10-1 - 10-5),
- ensuite le tiroir de cuisson à la vapeur (3) est introduit dans la carcasse de tiroir (2) et
- ensuite le tiroir de cuisson à la vapeur (3) introduit est chauffé.
